(19) Europäisches Patentamt
European Patent Office
Office européen des brevets

(11) Publication number: 0 110 370 B1

(12) # EUROPEAN PATENT SPECIFICATION

(45) Date of publication of patent specification: **22.04.87**

(51) Int. Cl.$^4$: **C 08 L 83/04**

(21) Application number: **83111917.7**

(22) Date of filing: **29.11.83**

(54) **A process for preparing a one-component organopolysiloxane composition.**

(30) Priority: **29.11.82 US 445302**

(43) Date of publication of application:
**13.06.84 Bulletin 84/24**

(45) Publication of the grant of the patent:
**22.04.87 Bulletin 87/17**

(84) Designated Contracting States:
**AT BE DE FR GB IT NL**

(56) References cited:
**EP-A-0 062 427**
**EP-A-0 072 474**
**GB-A- 849 885**
**GB-A-2 051 102**

(73) Proprietor: **Stauffer-Wacker Silicones Corporation**
**Adrian Michigan 49221 (US)**

(72) Inventor: **Shen, Ming**
**1145 Towbin Avenue**
**Lakewood, NJ 08701 (US)**
Inventor: **McAfee, Richard C.**
**1512 Southwick Drive**
**Tecumseh, MI 49286 (US)**

(74) Representative: **Wagner, Helga, Dr.**
**c/o Wacker-Chemie GmbH Prinzregentenstrasse 22**
**D-8000 München 22 (DE)**

**EP 0 110 370 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to a one-component organopolysiloxane composition, more particularly to a stable one-component organopolysiloxane composition and to a process for preparing the same.

Background of the invention

It is generally known that platinum catalysts will accelerate the addition of compounds containing silicon-bonded hydrogen atoms to compounds containing aliphatic unsaturation. In U.S. Patent No. 3,419,593, Willing discloses that virtually any compound which contains an ≡SiH group can be reacted with practically any compound which contains aliphatic multiple bonds in the presence of a platinum compound such as chloroplatinic acid.

Since the known platinum catalysts substantially increase the cure rate of organopolysiloxane compositions, it is necessary that the compound containing the SiH group be stored separately from the mixture containing the compound having aliphatic multiple bonds and the platinum catalyst. The compound containing the SiH group is then mixed with the compound containing the aliphatic multiple bonds and platinum catalyst just prior to use.

In order to prepare a one-component composition containing an organopolysiloxane having silicon-bonded aliphatic unsaturation, an organosilicon compound having silicon-bonded hydrogen atoms and platinum group metals, it is necessary to add an inhibitor which retards or inhibits the addition of the silicon-bonded hydrogen atoms to the silicon-bonded aliphatically unsaturated groups at room temperature.

Various types of inhibitors which may be incorporated in platinum catalyzed organopolysiloxane compositions to inhibit the addition of the silicon-bonded hydrogen atoms to the silicon-bonded aliphatically unsaturated groups are described in, for example, US. Patent 3,192,181 to Moore, U.S. Patent No. 3,344,111 to Chalk, U.S. Patent No. 3,445,420 to Kookootsedes et al, U.S. Patent No. 3,383,356 to Nielsen, U.S. Patent No. 3,882,083 to Berger et al and U.S. Patent No. 3,992,335 to Itoh et al. EP—A 72 474 to Schlak et al teaches to inhibit the reactivity of the catalyst at room temperature by dispersing it evenly in a solid which is unsoluble in the organopolysiloxane composition and has a melting point between 70 and 250°C.

One of the disadvantages of incorporating inhibitors in an organopolysiloxane composition in order to obtain shelf stability is that often times the inhibitors will evaporate from the composition. The composition will then begin to cure unpredictably while in storage. Also, some of the inhibitors may change over a period of time and are not effective in inhibiting the addition of the silicon-bonded hydrogen atoms to the silicon-bonded aliphatically unsaturated groups. Thus, it is preferred that the one-component organopolysiloxane compositions be free of inhibitors, but still have an extended shelf-life.

Therefore, it is an object of the present invention to provide a one-component organopolysiloxane composition. Another object of the present invention is to provide a one-component organopolysiloxane composition having a long shelf-life. Still another object of the present invention is to provide a one-component organopolysiloxane composition which is free of inhibitors. A further object of the present invention is to provide a process for preparing a one-component organopolysiloxane composition which has an indefinite shelf-life.

Summary of the invention

The foregoing objects and others which will become apparent from the following description are accomplished in accordance with this invention, generally speaking, by providing a process for preparing a stable one-component composition which is capable of being cured to an elastomer, based on an organopolysiloxane having silicon-bonded aliphatically unsaturated groups, a crosslinking agent consisting of an organosilicon compound having silicon-bonded hydrogen atoms and a catalyst being capable of promoting the addition of silicon-bonded hydrogen to silicon-bonded aliphatically unsaturated groups and optionally a filler characterized in that

(A) a mixture containing at least half of the catalyst and at least half of the organopolysiloxane having silicon-bonded aliphatically unsaturated groups and/or at least half of the filler is heated to a temperature of at least 70°C, and thereafter

(B) the organosilicon compound having at least 2 silicon-bonded hydrogen atoms per molecule is added to the mixture at a temperature below that at which crosslinking of the organopolysiloxane will occur.

Detailed description of the invention

The organopolysiloxanes (1) used in the process for preparing the one-component organopolysiloxane composition of this invention may be any diorganopolysiloxane which could have been used heretofore in diorganopolysiloxane-based compositions which could be crosslinked by the addition of silicon-bonded hydrogen to silicon-bonded aliphatic multiple bonds or through ionization radiation to form elastomers. Diorganopolysiloxanes which may be used are especially those of the general formula:

$$R_3SiO(SiR_2O)_nSiR_3$$

wherein R represents the same or different monovalent or substituted monovalent hydrocarbon radicals having up to 18 carbon atoms, in which an average of at least two aliphatically unsaturated groups are present per molecule and n is an integer having a value of at least 10.

Although this is generally not shown in the formula illustrated above, the siloxane chain of

the aforementioned diorganopolysiloxane may contain siloxane units in addition to the diorganosiloxane units ($SiR_2O$). Examples of such other siloxane units, which are generally present only as impurities, are those corresponding to the formulas $RSiO_{3/2}$ $R_3SiO_{1/2}$ and $SiO_{4/2}$, where R is the same as above. It is, however, preferred that such other siloxane units be present in an amount less than 1 mole percent. Still other siloxane units, for example, those of the formula $-SiR_2R'SiR_2O-$, where R is the same as above and R' is a bivalent hydrocarbon radical, for example, a phenyl radical, may be present in larger amounts.

It is preferred that the hydrocarbon radicals represented by R contain from 1 to 18 carbon atoms.

Examples of hydrocarbon radicals represented by R are alkyl radicals, for example, the methyl and ethyl radical, as well as propyl, butyl, hexyl and octadecyl radicals; alkenyl radicals such as the vinyl, allyl, ethylallyl and butadienyl radicals; aryl radicals such as the phenyl radical; alkaryl radicals such as the tolyl radicals; and aralkyl radicals such as the beta-phenylethyl radical.

Examples of substituted monovalent hydrocarbon radicals represented by R are halogenated hydrocarbon radicals, such as the 3,3,3-trifluoropropyl radical, chlorophenyl and bromotolyl radicals; and cyanoalkyl radicals, such as the beta-cyano-ethyl radical.

Because of their availability, it is preferred that at least 80 percent of the R radicals be methyl radicals.

Preferred diorganopolysiloxanes are those having trimethylsiloxy or vinyldimethylsiloxy groups as terminal units and contain from 0.01 to 5 mole percent of vinyldimethylsiloxy or methylvinylsiloxane units. More preferably the diorganopolysiloxanes are those containing from 0.02 to 2 mole percent of vinyldimethylsiloxy or methylvinylsiloxane units and the remaining diorganosiloxane units are dimethylsiloxane units.

When the compositions are to be cross-linked by the addition of silicon-bonded hydrogen to a silicon-bonded aliphatic multiple bond, it is essential that the diorganopolysiloxane which constitutes the base of the composition have at least two alkenyl radicals for each molecule of diorganopolysiloxane.

The viscosity of the diorganopolysiloxane used in the preparation of the composition of this invention is preferably 100 mPa.s at 25°C and more preferably from 200 to $10^6$ mPa.s at 25°C.

In addition to the diorganopolysiloxanes which constitute the base of these compositions, the compositions of this invention also contain fillers which have been or could have been used heretofore in the preparation of organosiloxane elastomers by the addition of silicon-bonded hydrogen to aliphatic multiple bonds or by ionization radiation.

The fillers can be reinforcing and/or non-reinforcing fillers. Examples of reinforcing fillers, that is fillers with a surface area of at least 50 $m^2/g$, are pyrogenically produced silicon dioxide, silicon dioxide aerogels, that is to say, silicic acid hydrogels dehydrated so as to maintain the structure, and precipitated silicon dioxide. Examples on non-reinforcing fillers, that is fillers having a surface area of less than 50 $m^2/g$, are calcium carbonate, quartz powder, diatomaceous earth, titanium dioxide, zirkonium silicate, aluminum silicate, zinc oxide, plaster of paris, so-called "molecular sieves", and asbestine, that is to say a magnesium-calcium silicate which resembles talc. All these fillers, but especially the reinforcing fillers, can have organosilyl groups on their surface if they have been pretreated, for example, with trimethylhalogenosilanes, as described in, for example, U.S. Patent No. 2,610,167, or if they have been manufactured, for example, by reaction of aqueous silica sols with organohalogenosilanes, or have been rendered hydrophobic in some other way.

Also, the fillers may be treated with other silicon compounds, such as hexamethyldisilazane and vinyltrialkoxysilanes to impart organosilyl groups to the surfaces of the treated fillers.

Preferably the fillers are used in amounts of from 0 to 200 percent by weight, especially from 5 to 150 percent by weight, based on the total weight of organopolysiloxane components. Non-reinforcing fillers are generally used in amounts of at least 20 percent by weight, based on the total weight of all organopolysiloxanes present, whereas reinforcing fillers are generally used in amounts of from 1 to 50 percent by weight, based on the total weight of all organopolysiloxanes present. It is, however, possible to use larger amounts of reinforcing fillers provided that the workability of the compositions does not suffer as a result. The amount of reinforcing fillers may exceed 50 percent by weight, if for example, the fillers have been obtained from the reaction of aqueous silica sols with organohalogenosilane.

The composition of this invention may also contain fibrous fillers, such as glass fibers having an average length up to about 0.5 mm, and/or asbestos fibers.

Examples of catalysts which promote the addition of silicon-bonded hydrogen to aliphatic multiple bonds are metallic finely dispersed platinum, ruthenium, rhodium, palladium and iridium. These metals may be dispersed on carriers, such as silicon dioxide, aluminum oxide or activated carbon. Furthermore, it is possible to use compounds or complexes of these metals, such as $PtCl_4$, $H_2PtCl_6 \cdot 6H_2O$, $Na_2PtCl_4 \cdot 4H_2O$, platinum-olefin complexes, platinum-alcohol complexes, platinum-alcoholate complexes, platinum-ether complexes, platinum-aldehyde complexes, platinum-ketone complexes, ammonium platinum complexes, platinum-vinylsiloxane complexes, especially platinum-divinyltetramethyl-disiloxane complexes with or without any detectable, inorganically bonded halogen, trimethylenedipyridine platinum dichloride; as well as iron, nickel and cobalt carbonyls.

When one of the above metals, compounds and/or complexes of said metals is used as a

catalyst to promote the addition of silicon-bonded hydrogen to aliphatic multiple bonds, then such catalysts are preferably used in an amount of from 0.5 to 500 ppm (parts per million by weight), calculated as the metallic elements and based on the weight of the diorganopolysiloxane containing aliphatic multiple bonds.

When the composition of this invention is to be crosslinked by the addition of silicon-bonded hydrogen to a silicon-bonded aliphatic multiple bond, then the composition must contain an organosilicon compound having at least 2 silicon-bonded hydrogen atoms per molecule, an organopolysiloxane having aliphatic multiple bonds and a catalyst which promotes the addition of silicon-bonded hydrogen to the silicon-bonded aliphatic multiple bonds.

The organosilicon compound containing at least 2 silicon-bonded hydrogen atoms per molecule is generally an organopolysiloxane, especially a methylhydrogenpolysiloxane.

The organosilicon compound may contain units represented by the formula

$$R^1_aSiO_{\frac{4-a}{2}}$$

where $R^1$ repressnts hydrogen or is the same as R, in which at least 2, and preferably 3, silicon-bonded hydrogen atoms are present per molecule and a is 1, 2 or 3. The preferred compound contains the following units: RHSiO-units, $R_2SiO$- and $R_3SiO_{1/2}$-units in which a silicon-bonded hydrogen atom is present for each 2 to 100 silicon atoms in the compound and has a viscosity of from 10 to 50,000 mPa.s at 25°C.

The organosilicon compound has at least 2 silicon-bonded hydrogen atoms per molecule and is preferably used in an amount of from 0.5 to 20 percent by weight, based on the weight of the diorganopolysiloxane containing aliphatic multiple bonds.

The one-component organopolysiloxane composition of this invention may be prepared by heating the catalyst (3), which is capable of promoting the addition of silicon-bonded hydrogen to silicon-bonded aliphatically unsaturated groups in the presence of the organopolysiloxane (1) having silicon-bonded aliphatically unsaturated groups and the filler (2) at an elevated temperature and thereafter adding (4) an organosilicon compound containing silicon-bonded hydrogen atoms to the resultant mixture after it has cooled below a temperature at which crosslinking will occur to form a one-component composition.

In addition, the organopolysiloxane composition of this invention may be prepared by heating a mixture containing the catalyst (3) which is capable of promoting the addition of silicon-bonded hydrogen to silicon-bonded aliphatically unsaturated groups and an organopolysiloxane (1) having silicon-bonded aliphatic unsaturation at an elevated temperature and thereafter adding a filler (2) to the resultant mixture. The organosilicon compound (4) containing silicon-bonded hydrogen atoms is added to the resultant mixture after it has cooled below a temperature at which crosslinking will occur to form a one-component composition capable of being cross-linked at an elevated temperature to form an elastomer.

Also, the organopolysiloxane composition may be prepared by heating a mixture containing the catalyst (3) in the presence of a filler (2) to an elevated temperature and thereafter adding organopolysiloxane (1) to the resultant mixture. The organosilicon compound (4) is added to the mixture after it has cooled below a temperature at which crosslinking will occur to form a one-component composition.

In preparing the one-component composition of this invention, it is preferred that the catalyst (3) be heated in the presence of the organopolysiloxane (1) and/or filler (2) at a temperature of from 70°C up to 300°C and more preferably from 100°C to 250°C for at least 1 minute and more preferably from 30 minutes up to 3 hours. Obviously, the higher the temperature, the shorter the heating time. The composition may be heated in the presence of air or an inert atmosphere such as nitrogen at atmospheric pressure. Higher or lower pressures may be employed, if desired.

The resultant composition is cooled, preferably below 60°C, and then mixed with the organosilicon compound (4). The composition may be stored at ambient temperature until it is ready for use.

These compositions may be crosslinked by heating them to a temperature of from about 100°C to about 400°C, and more preferably to a temperature of from about 175° to 250°C. Crosslinking may also be achieved by other sources. Examples of other sources are ultraviolet, X-ray, microwave energy, alpha, beta and/or gamma radiation. When the compositions are to be crosslinked exclusively by radiation, a dose of from 5 to 8 megarad is preferred.

In preparing these compositions, it is not essential that all the organopolysiloxane (1) and/or filler (2) be mixed with the catalyst (3) and heated. However, a portion of at least one-half of the filler (2) and/or the organopolysiloxane (1) must be mixed with catalyst (3) and heated and then the remainder of the organopolysiloxane (1) and/or filler (2) is added to the mixture. The mixture is preferably cooled below about 60°C before the organosilicon compound (4) is added.

Likewise, a portion of at least one half of the catalyst (3) may be added to the organopolysiloxane (1) and the remainder may be admixed with the organosilicon compound (4) or added prior to, simultaneously with, or after the addition of the organosilicon compound (4).

One advantage of the composition of this invention over compositions known heretofore is that the catalyst (3) may be heated in the presence of either the organopolysiloxane (1) the filler (2), or in the presence of a mixture of organopolysiloxane (1) and filler (2), then cooled and mixed

immediately with the organosilicon compound (4) and stored without any apparent evidence of crosslinking.

Additional substances which may be added to the compositions of this invention are heat stabilizers, antioxidants, processing aids such as organopolysiloxanes containing silicon-bonded hydroxyl groups and having a maximum of 100 silicon atoms per molecule, and plasticizers, as well as substances which may improve other properties of the elastomers.

Examples of plasticizers are especially trimethylsiloxy end blocked dimethylpolysiloxanes having a maximum of 1000 silicon atoms per molecule.

Adhesive promoters, such as glycidyloxypropyltrialkoxysilane, may be used to improve the adhesion of the elastomers to the surfaces.

The compositions and elastomers prepared in accordance with this invention have the same type of utility as other organopolysiloxanes. They are especially useful for potting and encapsulating applications. Also, they may be used as coatings, as gaskets and as sealants.

The following examples are for purposes of illustration and are not to be construed as being limited to the following embodiments. In these examples all parts are by weight unless otherwise specified.

Preparation of platinum catalyst

The platinum catalyst used in the following examples is prepared in the following manner:

An aminofunctional silicon composition is prepared by heating a mixture containing about 226.4 parts of octamethyl-cyclotetrasiloxane, 22.4 parts of β-(aminoethyl)-γ-aminopropyl-trimethoxysilane and 0.29 parts of potassium hydroxide to a temperature of 145°C for three hours. After cooling the liquid product to room temperature, 0.29 parts of acetic acid are added to neutralize the potassium hydroxide. The product is filtered and a liquid product having a viscosity of about 40 mPa.s at 25°C is recovered.

About 28.8 parts of the aminofunctional silicon composition prepared above are added to a reactor under an atmosphere of nitrogen. About 100 parts of isopropanol, 1.04 parts of chloroplatinic acid hexahydrate, and 45 parts of toluene are added to the reactor and the reaction mixture is stirred for 30 minutes at 27°C. The resultant transparent orange-colored product which contains 0.16 weight percent of platinum is identified as being an ammonium platinum complex.

Example 1

About 100 parts of a trimethylsiloxy endblocked diorganopolysiloxane which consists of 99.86 mole percent of dimethylsiloxane units and 0.14 mole percent of methylvinylsiloxane units and having a Williams plasticity value of about 105 are mixed with 57 parts of pyrogenically prepared silicon dioxide having a surface of about 200 $m^2/g$, and 2.5 parts of the ammonium platinum complex prepared above and heated for 1 hour at 180°C in the presence of nitrogen and then cooled to room temperature. To the resultant mixture are added 5 parts of the pyrogenically prepared silicon dioxide, 0.8 parts of the ammonium platinum complex and 1.6 parts of methylhydrogenpolysiloxane having a silicon to hydrogen ratio of 1:1 and a viscosity of 5.0 mPa.s at 25°C. The mixture is then stored at room temperature for 2 months. The plasticity values are essentially unchanged after storage. A sample of the stored material is extruded to form a film, press-cured at about 175°C for 10 minutes and then post-cured at 204°C for about 4 hours. The properties of the resultant elastomer are essentially the same after storage as before storage.

Example 2

The procedure of Example 1 is repeated except that 80 parts of a pyrogenically prepared silicon dioxide having a surface area of 200 $m^2/g$ are combined with 2.5 parts of the ammonium platinum complex prepared above and heated for 1 hour at 180°C in the presence of nitrogen and then cooled to room temperature. About 100 parts of a trimethylsiloxy endblocked diorganopolysiloxane having 99.86 mole percent of dimethylsiloxane units and 0.14 mole percent of methylvinylsiloxane units and a Williams plasticity value of about 105, 0.8 parts of the ammonium platinum complex and 1.6 parts of methylhydrogen polysiloxane having a silicon to hydrogen ratio of 1:1 and a viycosity of 5.0 mPa.s at 25°C are added to the resultant mixture. The plasticity value of the resultant composition is substantially unchanged after storing for 1 month at room temperature.

Example 3

About 100 parts of a trimethylsiloxy endblocked diorganopolysiloxane which consists of 99.86 mole percent of dimethylsiloxane units and 0.14 mole percent of methylvinylsiloxane units and having a Williams plasticity value of about 105 are mixed with 2.5 parts of the ammonium platinum complex prepared above and heated for 1 hour at 180°C in the presence of nitrogen, and then cooled to room temperature. To the resultant mixture are added 80 parts of pyrogenically prepared silicon dioxide having a surface area of about 200 $m^2/g$, and 1.6 parts of methylhydrogenpolysiloxane having a silicon to hydrogen ratio of 1:1 and a viscosity of 5.0 mPa.s at 25°C. The mixture is then stored at room temperature for 2 months. The plasticity value of the resultant composition is substantially unchanged after storing for 2 months at room temperature. The stored composition cures to an elastomer when heated at 175°C for 10 minutes.

Example 4

The procedure of Example 1 is repeated except that 70 parts of calcium carbonate is substituted for the pyrogenically prepared silicon dioxide. The composition shows no apparent crosslinking after being stored for 1 month at room temperature.

Example 5

The procedure of Example 1 is repeated except 40 parts of calcium carbonate and 40 parts of quartz powder are substituted for 80 parts of pyrogenically prepared silicon dioxide. No apparent crosslinking is observed after storing for 1 month at room temperature.

Example 6

The procedure of Example 2 is repeated except that 20 parts of titanium dioxide, 30 parts of pyrogenically prepared silicon dioxide and 30 parts of quartz powder are substituted for the 80 parts of pyrogenically prepared silicon dioxide. No apparent crosslinking is observed after storing for 1 month at room temperature.

Example 7

The procedure of Example 1 is repeated except that a solution of chloroplatinic acid in isopropanol is substituted for the ammonium platinum complex in such an amount that 15 ppm of platinum are present.

The resultant composition shows no apparent crosslinking after being stored for 1 month. It is then extruded and press-cured for 10 minutes at 175°C and then post-cured at 204°C. The properties of the resultant elastomer are essentially unchanged after storage.

Example 8

The procedure of Example 7 is repeated except that 15 ppm of a platinum-ketone complex solution are substituted for the chloroplatinic acid.

The resultant composition is stored for 1 month, then extruded, press-cured and post-cured. The properties of the resultant elastomer are essentially unchanged after storage. The platinum-ketone complex is prepared by adding one part of chloroplatinic acid ($H_2PtCl_6 \cdot 6H_2O$) to 200 parts of cyclohexanone which has been heated to 80°C. The solution is maintained at 80°C for 45 minutes and then dried over anhydrous sodium sulfate.

Example 9

The procedure of Example 1 is repeated except that 100 parts of a vinyl endblocked dimethylpolysiloxane having a viscosity of 1000 mPa.s at 25°C is substituted for the trimethylsiloxy endblocked diorganopolysiloxane. About 9.6 parts of a methylhydrogenpolysiloxane having a silicon to hydrogen ratio of 6:1 and a viscosity of 5.0 mPa.s at 25°C is substituted for the methylhydrogenpolysiloxane having a silicon to hydrogen rato of 1:1.

The resultant composition is essentially unchanged after being stored for 1 month at room temperature.

Comparison Example $V_1$

About 100 parts of a trimethylsiloxy endblocked diorganopolysiloxane which consists of 99.86 mole percent of dimethylsiloxane units and 0.14 mole percent of methylvinylsiloxane units and having a Williams plasticity value of about 105 are mixed with 3.0 parts of the ammonium platinum complex prepared above, 80 parts of pyrogenically prepared silicon dioxide having a surface area of 200 $m^2/g$ and mixed with 1.6 parts of methylhydrogen polysiloxane having a silicon to hydrogen ratio of 1:1 and a viscosity of 5 mPa.s at 25°C. The mixture cures at room temperature to a solid in about 10 minutes.

Comparison Example $V_2$

The procedure of Example 7 is repeated except that the heating step is omitted. The composition cures to a solid in less than 240 minutes at room temperature.

Comparison Example $V_3$

The procedure of Example 8 is repeated except that the heating step is omitted. Crosslinking is observed after about 200 minutes at room temperature.

Comparison Example $V_4$

The procedure of Example 9 is repeated except the heating step is omitted. The composition cures to a solid in about 30 minutes at room temperature.

**Claims**

1. A process for preparing a stable one-component composition which is capable of being cured to an elastomer, based on an organopolysiloxane having silicon-bonded aliphatically unsaturated groups, a crosslinking agent consisting of an organosilicon compound having silicon-bonded hydrogen atoms and a catalyst being capable of promoting the addition of silicon-bonded hydrogen to silicon-bonded aliphatically unsaturated groups and optionally a filler characterized in that

(A) a mixture containing at least half of the catalyst and at least half of the organopolysiloxane having silicon-bonded aliphatically unsaturated groups and/or at least half of the filler is heated to a temperature of at least 70°C and thereafter

(B) the organosilicon compound having at least 2 silicon-bonded hydrogen atoms per molecule is added to the mixture at a temperature below that at which crosslinking of the organopolysiloxane will occur.

2. Process according to Claim 1 characterized in that an organopolysiloxane is used which contains at least two silicon-bonded aliphatically unsaturated groups per molecule.

3. Process according to Claim 1 characterized in that up to 200 percent by weight of a filler based on the total weight of the organopolysiloxane components are used.

4. Process according to Claim 3, characterized in that in step (A)

at least half of the catalyst and at least half of the organopolysiloxane are heated or

at least half of the catalyst, the organopolysiloxane and the filler are heated or

at least half of the catalyst and at least half of the filler are heated and the resultant mixture is cooled

prior to the addition of the remainder of the catalyst, the organopolysiloxane and/or the filler and/or the organosilicon compound in step (B).

5. Process according to Claim 1 and 4, characterized in that after the heating step (A) has been carried out the resultant mixture is cooled below 60°C prior to the addition of the organosilicon compound in step (B).

6. Employment of the stable one-component composition as prepared according to any of the preceding claims for curing to an elastomer by heating said composition to a temperature of at least 100°C to promote crosslinking.

**Patentansprüche**

1. Verfahren zur Herstellung einer zu einem Elastomer vulkanisierbaren stabilen Einkomponentenmasse auf der Grundlage eines Organopolysiloxans mit an Silicium gebundenen aliphatischungesättigten Gruppen, eines Vernetzungsmittels, bestehend aus einer Organosiliciumverbindung mit an Silicium gebundenen Wasserstoffatomen und eines Katalysators, welcher die Addition des an Silicium gebundenen Wasserstoffs an die an Silicium gebundenen aliphatische ungesättigten Gruppen beschleunigen kann, und gegebenenfalls eines Füllmittels, dadurch gekennzeichnet, daß (A) eine Mischung, die mindestens die Hälfte des Katalysators und mindestens die Hälfte des Organopolysiloxans mit den an Silicium gebundenen ungesättigt-aliphatischen Gruppen und/oder mindestens die Hälfte des Fu8llmittels enhält, auf eine Temperatur von mindestens 70°C erhitzt wird und anschließend

(B) die Organosiliciumverbindung mit mindestens 2 an Silicium gebundenen Wasserstoffatomen pro Molekül bei einer Temperatur unterhalb der Vernetzungstemperatur des Organopolysiloxans zu dieser Mischung hinzugefügt wird.

2. Verfahren nach Anspruch 1, dadurch gekennzeichnet, daß ein Organopolysiloxan mit mindestens 2 an Silicium gebundenen ungesättigt-aliphatischen Gruppen pro Molekül verwendet wird.

3. Verfahren nach Anspruch 1, dadurch gekennzeichnet, daß bis zu 200 Gew.-% eines Füllmittels, bezogen auf das Gesamtgewicht der Organopolysiloxanbestandteile, verwendet wird.

4. Verfahren nach Anspruch 3, dadurch gekennzeichnet, daß in Stufe (A) mindestens die Hälfte des Katalysators und mindestens die Hälfte des Organopolysiloxans oder

mindestens die Hälfte des Katalysators, des Organopolysiloxans und des Füllmittels oder

mindestens die Hälfte des Katalysators und die Hälfte des Füllmittels erhitzt werden und

die entstandene Mischung vor der Zugabe des Restes des Katalysators, des Organopolysiloxans und/oder Füllmittels und/oder Organosiliciumverbindung in Stufe (B) gekühlt wird.

5. Verfahren nach den Ansprüchen 1 und 4, dadurch gekennzeichnet, daß nach dem Erhitzen in Stufe (A) die entstandene Mischung vor der Zugabe der Organosiliciumverbindung in Stufe (B) auf eine Temperatur unterhalb 60°C gekühlt wird.

6. Verwendung der nach einer der vorangegangenen Ansprüche hergestellten stabilen Einkomponentenmasse zur Vulkanisierung zu einem Elastomer, wobei diese Masse zur Beschleunigung des Vernetzens auf eine Temperatur von mindestens 100°C erhitzt wird.

**Revendications**

1. Un procédé de préparation d'une composition stable à un composant, pouvant durcir (réticulation) en donnant un élastomère, à base d'un polyorganosiloxane ayant des groupes aliphatiques insaturés liés à du silicium, d'un agent rèticulant qui est un composé organique du silicium avec des atomes d'hydrogène liés au silicium, et d'un catalyseur pouvant activer l'addition de l'hydrogène lié au silicium aux groupes aliphatiques insaturés liés au silicium, avec facultativement une charge, procédé caractérisé en ce que:

(A) on chauffe à 70°C au moins un mélange contenant au moins la moitié du catalyseur et au moins la moitié du polyorganosiloxane à groupes aliphatiques insaturés liés à du silicium, et/ou au moins la moitié de la charge, puis

(B) on ajoute au mélange le composé organique du silicium ayant par molecule au moins deux atomes d'hydrogène liés à du silicium à une température inférieure à laquelle se produit la réticulation du polyorganosiloxane.

2. Procédé selon la revendication 1 caractérisé en ce que le polyorganosiloxane comprend par molécule au moins deux groupes insaturés aliphatiques liés à du silicium.

3. Procédé selon la revendication 1 caractérisé en ce que l'on ajoute jusqu'à 200% en poids d'une charge par rapport au poids total des polyorganosiloxanes.

4. Procédé selon la revendication 3 caractérisé en ce que dans l'opération A on chauffe au moins la moitié du catalyseur avec au moins la moitié du polyorganosiloxane, ou bien

on chauffe au moins la moitié du catalyseur avec le polyorganosiloxane et la charge, ou bien

on chauffe au moins la moitié du catalyseur avec au moins la moitié de la charge,

et on refroidit le mélange avant de lui ajouter le reste du catalyseur, du polyorganosiloxane et/ou de la charge, et/ou le composé organique du silicium dans l'opération B.

5. Procédé selon l'une quelconque des revendications 1 à 4, caractérisé en ce que après l'opération A on refroidit le mélange au-dessous de 60°C avant de lui ajouter le composé organique du silicium dans l'opération B.

6. La réticulation (durcissement) en un élastomère d'une composition selon l'une quelconque des revendications précédentes par chauffage de cette composition à une température d'au moins 100°C pour activer la réticulation.